Europäisches Patentamt

European Patent Office

Office européen des brevets

(19)

(11) Veröffentlichungsnummer: **0 005 875**
**B1**

(12) **EUROPÄISCHE PATENTSCHRIFT**

(45) Veröffentlichungstag der Patentschrift:
**26.05.82**

(21) Anmeldenummer: **79200235.4**

(22) Anmeldetag: **14.05.79**

(51) Int. Cl.³: **C 01 B 25/18, C 01 B 17/76**

(54) **Verfahren zur Aufkonzentrierung von verdünnter Phosphorsäure.**

(30) Priorität: **01.06.78 DE 2824010**

(43) Veröffentlichungstag der Anmeldung:
**12.12.79 Patentblatt 79/25**

(45) Bekanntmachung des Hinweises auf die Patenterteilung:
**26.05.82 Patentblatt 82/21**

(84) Benannte Vertragsstaaten:
**BE DE FR GB NL**

(56) Entgegenhaltungen:
DE-B-2 700 009
DE-B-1 221 202
FR-A-1 338 527
GB-A-1 032 205
A. V. SLACK: «Phosphoric acid» Vol. 1, Teil II, 1968,
Marcel Dekker Inc., New York, Seite 614.5 «Utilities»

(73) Patentinhaber: **METALLGESELLSCHAFT AG,**
**Reuterweg 14 Postfach 3724, D-6000 Frankfurt/M.1 (DE)**

(72) Erfinder: **Blumrich, Walter, Dr. Dipl.-Chem.,**
**Dehnhardtstrasse 49 c, D-6000 Frankfurt am**
**Main 50 (DE)**
Erfinder: **Dörr, Karl-Heinz, Dipl.-Ing., Am Gonsenheimer**
**Spiess 6, 6500 Mainz (DE)**
Erfinder: **König, Hans Jochen, Dipl.-Ing., Schwanthaler**
**Strasse 19, D-6000 Frankfurt am Main (DE)**
Erfinder: **Sander, Ulrich, Dr.Dipl.-Chem.,**
**Taunusstrasse 116, D-6382 Friedrichsdorf (DE)**

(74) Vertreter: **Fischer, Ernst, Dr., Reuterweg 14,**
**D-6000 Frankfurt am Main 1 (DE)**

Verfahren zur Aufkonzentrierung von verdünnter Phosphorsäure

Die Erfindung betrifft ein Verfahren zur Aufkonzentrierung von verdünnter Phosphorsäure, wobei die verdünnte Phosphorsäure in mehreren hintereinandergeschalteten Vakuum-Verdampferstufen mit jeweiliger separater Kreislaufführung der Phosphorsäurekreisläufe ausserhalb der Verdampfer mittels überschüssiger Wärme aus einer Schwefelsäurekontaktanlage aufkonzentriert wird.

Beim Aufschluss von Rohphosphaten mit Schwefelsäure fällt in vielen Fällen eine verdünnte Phosphorsäure von etwa 26 bis 32% $P_2O_5$ an, die für den Einsatz bei der Düngemittelherstellung auf über etwa 45% $P_2O_5$ aufkonzentriert werden muss.

Aus A. V. Slack: «Phosphoric Acid», Band II, 1968, Marcel Dekker, Inc., New York, Seiten 607–634 ist es bekannt, die Aufkonzentrierung unter Vakuum-Verdampfung unter Kreislaufführung der Phosphorsäurekreisläufe ausserhalb der Verdampfer mittels Niederdruckdampf durchzuführen, wobei der Dampf durch überschüssige Wärme einer Schwefelsäurekontaktanlage erzeugt wird. Da die Aufkonzentrierung einen sehr energieintensiven Prozess darstellt, wird ein grosser Anteil der in der Schwefelsäurekontaktanlage in Form von Dampf erzeugten hochwertigen Energie für die Aufkonzentrierung verbraucht. Andererseits könnte dieser in Form von wertvollem Dampf für die Aufkonzentrierung benötigte Energieanteil aus der Schwefelsäurekontaktanlage zur Deckung des Gesamtenergiebedarfs der Schwefelsäure-Phosphorsäure-Verbundanlage durch entsprechend höhere elektrische Stromerzeugung eingesetzt werden.

Die FR-A-1 338 527 beschreibt, dass zur Aufkonzentrierung von verdünnter Phosphorsäure die hochwertige Wärme der etwa 900° C heissen Schwefelverbrennungsgase erforderlich ist. Bei einer Arbeitsweise mit einer Vakuum-Verdampferstufe erfolgt die Aufheizung der Phosphorsäure in einem Wärmeaustauscher mittels Dampf, der durch Verwendung der hochwertigen Wärme der Schwefelverbrennungsgase im Dampfkessel erzeugt wird. Auch für die ohne Vakuum-Verdampferstufen betriebenen Arbeitswesen wird die Wärme der Schwefelverbrennungsgase für die Aufheizung von Luft im Wärmeaustauscher benötigt, die dann in den Aufkonzentrierer geleitet wird. Die Luft wird bis zu einer Temperatur von etwa 700° C aufgeheizt.

Die DE-B-1 221 202 beschreibt eine Aufkonzentrierung verdünnter Phosphorsäure, bei der die Aufheizung der Phosphorsäure in einem Verdampfer durch indirekten Wärmeaustausch mit heisser, verdünnter Schwefelsäure erfolgt. Die verdünnte Schwefelsäure wird aus konzentrierter Schwefelsäure durch Absorption von Wasserdampf aus der Verdampferstufe gebildet und erhält dabei ihre Temperatur durch Kondensations- und Verdünnungswärme. Dieses Verfahren benötigt also konzentrierte Schwefelsäure als Träger von potentieller Energie zur Bindung von Wasserdampf und Abgabe von Verdünnungswärme. Die produzierte, verdünnte Schwefelsäure von etwa 70% muss aus dem Verfahren abgezogen werden, d. h. sie muss verwendbar sein. Heute erfolgt der Aufschluss der Phosphate aber durch Schwefelsäure mit wesentlich höheren Konzentrationen. Dieses Verfahren benötigt zur Aufkonzentrierung ein unter beträchtlichem Energieeinsatz erzeugtes, wertvolles Produkt, nämlich konzentrierte Schwefelsäure, die in verdünnte Schwefelsäure umgesetzt werden muss.

Der Erfindung liegt die Aufgabe zugrunde, bei einer Schwefelsäure-Phosphorsäure-Verbundanlage den Einsatz von wertvoller Energie für die Aufkonzentrierung der verdünnten Phosphorsäure möglichst weitgehend zu vermeiden und in technisch einfacher und wirtschaftlicher Weise zu ersetzen.

Die Lösung dieser Aufgabe erfolgt erfindungsgemäss dadurch, dass die indirekte Aufheizung der Phosphorsäurekreisläufe durch im geschlossenen Kreislauf geführtes Druckwasser erfolgt, das im indirekten Wärmeaustausch mit der Schwefelsäure der Kreisläufe der $SO_3$-Absorptionssysteme der Schwefelsäurekontaktanlage mittels in der Schwefelsäure anfallender und abzuführender überschüssiger Wärme aufgeheizt wird.

Die Absorption des in der Schwefelsäurekontaktanlage gebildeten $SO_3$ erfolgt mit konzentrierter Schwefelsäure, die im Kreislauf geführt wird. In den meisten Fällen erfolgt die Absorption in einem Zwischenabsorber und in einem Endabsorber. Die bei der exothermen Reaktion gebildete Wärme sowie die aus der Gasphase aufgenommene fühlbare Wärme führt zu Temperaturen der aus den Absorbern ablaufenden Säuren von etwa 80–100° C und bei Heissabsorptionssystemen bis zu etwa 200° C. Zur Abführung der anfallenden Wärme müssen die Schwefelsäurekreisläufe gekühlt werden, was im allgemeinen ohne Nutzbarmachung dieser auf relativ niedrigem Temperaturniveau anfallenden Wärmeenergie erfolgt. Die Aufkonzentrierung der verdünnten Phosphorsäure erfolgt in zwei oder mehr Vakuum-Verdampferstufen. Die Phosphorsäure wird in jeder Stufe im Kreislauf geführt und nur soviel Phosphorsäure in die nächste Stufe geleitet wie zufliesst. Der Zufluss der Phosphorsäure kann direkt in den Verdampfer oder in den Kreislauf im Ablauf des Verdampfers erfolgen. Der Phosphorsäurekreislauf jeder Verdampferstufe wird durch mindestens einen Wärmeaustauscher geleitet und dort mit der aus der Schwefelsäure der Absorptionssysteme abzuführenden Wärme aufgeheizt. Ein Teil der in der letzten Verdampferstufe ausgeschiedenen Feststoffe kann separiert und in den Phosphorsäurekreislauf der ersten Stufe überführt werden, um Ansatzprobleme insbesondere in den Wärmeaustauschern zu vermeiden. In den Vakuum-Verdampferstufen erfolgt die Aufkonzentrierung der Phosphorsäure durch Wasserverdampfung entsprechend dem Wasserdampfpartialdruck bei den herrschenden Temperatur-, Druck- und Phosphorsäurekonzentrations-Bedingungen. Neben Wasser werden auch fluorhaltige Verbindungen weitgehendst ausgetrieben, während der Phosphorsäure-Partialdampfdruck sehr gering ist.

Die abfliessende Schwefelsäure der Absorptionssysteme wird in Wärmeaustauscher geleitet, die in der Nähe der Absorptionssysteme angeordnet sind. Hier wird das Druckwasser aufgeheizt. Dieses wird dann in die Wärmeaustauscher der Phosphorsäurekreisläufe geleitet. Es kann mit einem oder mehreren geschlossenen Druckwasser-Kreisläufen gearbeitet werden.

Die Erfindung wird an Hand einer Figur und eines Beispieles näher erläutert.

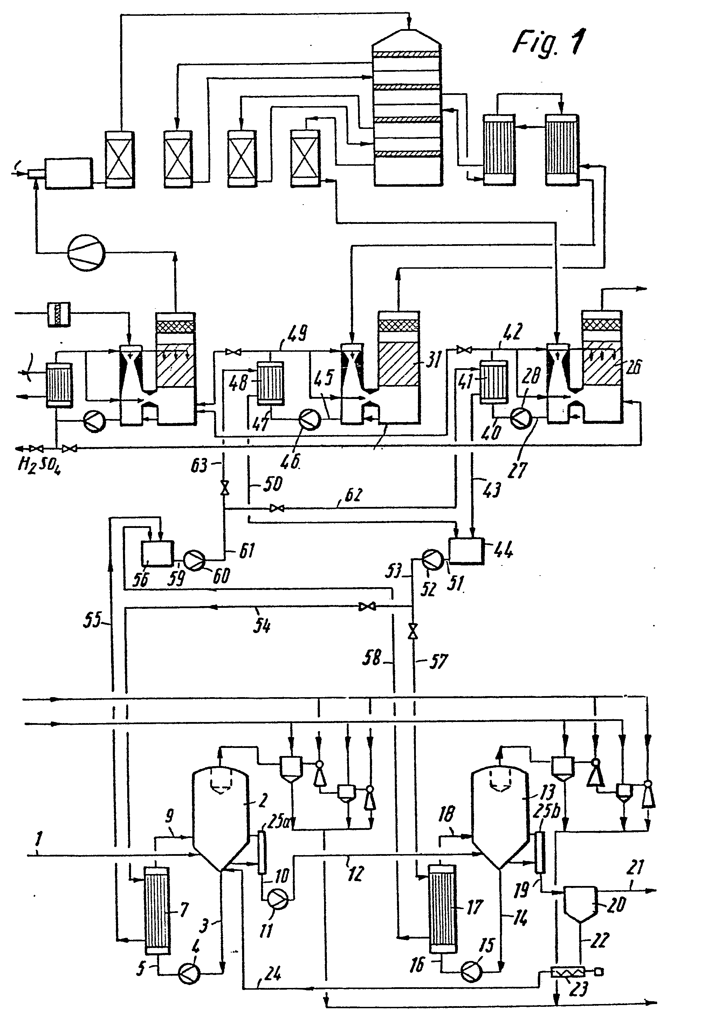

Fig. 1 ist ein Fliessschema einer Schwefelsäurekontaktanlage mit einer Phosphorsäure-Aufkonzentrieranlage, bei der die Schwefelsäure der Absorptionssysteme zunächst Druckwasser aufheizt und dieses in die Wärmeaustauscher der Phosphorsäurekreisläufe geleitet wird.

In Figur 1 wird verdünnte Phosphorsäure über Leitung 1 in den Verdampfer 2 der ersten Vakuum-Verdampferstufe geleitet. Die Phosphorsäure fliesst über Leitung 3 aus dem Verdampfer 2 ab, wird mittels Pumpe 4 über Leitung 5 in den Wärmeaustauscher 7 und nach Aufheizung über Leitung 9 in den Verdampfer 2 zurückgeführt. Über Leitung 10 wird eine Menge an Phosphorsäure, die dem Phosphorsäuregehalt des Zulaufes über Leitung 1 entspricht, mittels Pumpe 11 über Leitung 12 in den Verdampfer 13 der zweiten Vakuum-Verdampferstufe geleitet. Die Phosphorsäure fliesst über Leitung 14 aus dem Verdampfer 13 ab, wird mittels Pumpe 15 über Leitung 16 in den Wärmeaustauscher 17 und nach Aufheizung über Leitung 18 in den Verdampfer 13 zurückgeführt. Über Leitung 19 wird die aufkonzentrierte Phosphorsäure in einen Absetzbehälter 20 geleitet und über Leitung 21 wird die Produktion abgezogen. Über Leitung 22, Schneckenpumpe 23 und Leitung 24 wird ein Teil der abgeschiedenen Feststoff-Suspension in den Verdampfer 2 der ersten Vakuum-Verdampferstufe geleitet. Die Ablaufleitungen 10 und 19 der Verdampfer 2 und 13 werden durch Entlüfter 25a, 25b entlüftet.

Aus dem Endabsorber 26 wird die heisse Schwefelsäure über Leitung 27, Pumpe 28 und Leitung 40 in den Wärmeaustauscher 41 geleitet und von dort über Leitung 42 in den Endabsorber 26 zurückgeführt. Das im Wärmeaustauscher 41 aufgeheizte Druckwasser wird über Leitung 43 in den Zwischenbehälter 44 geleitet. Aus dem Zwischenabsorber 31 wird die heisse Schwefelsäure über Leitung 45, Pumpe 46 und Leitung 47 in den Wärmeaustauscher 48 geleitet und von dort über Leitung 49 in den Zwischenabsorber 31 zurückgeführt. Das im Wärmeaustauscher 48 aufgeheizte Druckwasser wird über Leitung 50 in den Zwischenbehälter 44 geleitet. Aus dem Zwischenbehälter 44 wird über Leitung 51, Pumpe 52, Leitungen 53 und 54 ein Teilstrom des Druckwassers in den Wärmeaustauscher 7 geleitet und über Leitung 55 in den Zwischenbehälter 56 geleitet. Über Leitung 57 wird der restliche Teilstrom des Druckwassers in den Wärmeaustauscher 17 geleitet und über Leitung 58 in den Zwischenbehälter 56 geleitet. Aus dem Zwischenbehälter 56 wird ein Teilstrom des Druckwassers über Leitung 59, Pumpe 60, Leitungen 61 und 62 in den Wärmeaustauscher 41 zurückgeführt. Der restliche Teilstrom des Druckwassers aus dem Zwischenbehälter 56 wird über Leitung 63 in den Wärmeaustauscher 48 zurückgeführt.

Zum Ausgleich der gesamten Wärmebilanz, insbesondere für den Anfahr- und Abstellvorgang, kann in dem Kreislauf des Druckwassers ein zusätzlicher Wärmeaustauscher zum Kühlen oder Aufheizen eingeschaltet werden.

Ausführungsbeispiele

Die Phosphorsäureanlage ist im Verbund mit einer Schwefelsäureanlage einer Produktionskapazität von 1500 t $H_2SO_4$ pro Tag, gerechnet als 100% $H_2SO_4$, ausgelegt.

| Position | | Einheiten | Fig. 1 |
|---|---|---|---|
| 1 | verdünnte frische | t/h | 81,1 |
| | Phosphorsäure | Gew% $P_2O_5$ | 28,0 |
| 2 | Unterdruck | mbar | 240 |
| 3 | $P_2O_5$ Konzentration | Gew% $P_2O_5$ | 42 |
| | Feststoffgehalt | Gew% | 4 |
| | Säuremenge | t/h | 8300 |
| | Säuretemperatur | °C | 83 |
| 9 | Säuretemperatur | °C | 86 |
| 12 | Phosphorsäuremenge | t/h | 54 |
| 13 | Unterdruck | mbar | 70 |
| 14 | $P_2O_5$ Konzentration | Gew% $P_2O_5$ | 54 |
| | Säuremenge | t/h | 4300 |
| | Säuretemperatur | °C | 83 |
| 18 | Säuretemperatur | °C | 86 |
| 21 | Produktionsabgabe | t/h | 42 |

| Position | | Einheiten | Fig. 1 |
|---|---|---|---|
| 21 | Produktionsabgabe | t/h | 42 |
| | Säurekonzentration | Gew% $P_2O_5$ | 54 |
| 22 | Feststoffmenge | t/h | 3 |
| 27 | Endabsorber-Säuremenge | t h | 900 |
| | Säurekonzentration | Gew% $H_2SO_4$ | 98,5 |
| | Säuretemperatur | °C | 140 |
| 42 | Säuretemperatur | °C | 120 |
| 45 | Säuremenge | t h | 2400 |
| | Säurekonzentration | Gew% $H_2SO_4$ | 98,5 |
| | Säuretemperatur | °C | 140 |
| 49 | Säuretemperatur | °C | 120 |
| 51 | Druckwasser-Menge | t/h | 1235 |
| | Druckwasser-Temperatur | °C | 120 |
| 54 | Druckwasser-Menge | t h | 845 |
| 57 | Druckwasser-Menge | t h | 390 |
| 59 | Druckwasser-Temperatur | °C | 100 |

Die hauptsächlichen Vorteile der Erfindung bestehen darin, dass die zur Aufkonzentrierung notwendige Energie mit Ausnahme der für die Vakuum-Erzeugung notwendigen Energie ausschliesslich durch Verwendung von minderwertiger Wärme aus der Schwefelsäurekontaktanlage gedeckt werden kann. Gleichzeitig wird die sonst im allgemeinen übliche Kühlung der Schwefelsäurekreisläufe der Absorptionssysteme mittels Kühlwasser oder Luft überflüssig und die damit verbundene thermische Belastung der Umwelt vermieden. Trotz der weitgehenden Verwendung von minderwertiger Wärmeenergie ist der apparative und betriebliche Aufwand nicht höher als bei einer Verwendung von z. B. Dampf als Heizmedium. Die gegenseitige Betriebsabhängigkeit der Phosphorsäure-Aufkonzentrieranlage und der Schwefelsäurekontaktanlage gemäss der Erfindung unterscheidet sich prinzipiell nicht von derjenigen, bei welcher der in der Schwefelsäurekontaktanlage erzeugte Dampf als. Heizmedium eingesetzt wird. Durch den geschlossenen Druckwasserkreislauf zur Wärmeübertragung ist es möglich, entweder die vorhandenen Wärmeaustauscher in den Absorptionssystemen und in den Phosphorsäure-Aufkonzentriersystemen und in den Phosphorsäure-Aufkonzentriersystemen bei bestehenden Anlagen zu verwenden, oder bei Neuanlagen die bewährten und billigen Wärmeaustauscher einzusetzen. Die Kosten für etwas grössere Wärmeaustauscher kompensieren bei weitem die Kosten für zwar etwas kleinere aber aus sehr hochwertigen, speziellen und entsprechend teuren Werkstoffen hergestellten Wärmeaustauscher für einen direkten Wärmeaustausch zwischen Schwefelsäure und Phosphorsäure, abgesehen von der erprobten Betriebssicherheit der konventionellen Wärmeaustauscher.

**Patentanspruch**

Verfahren zur Aufkonzentrierung von verdünnter Phosphorsäure, wobei die verdünnte Phosphorsäure in mehreren hintereinandergeschalteten Vakuum-Verdampferstufen mit jeweiliger separater Kreislaufführung der Phosphorsäuren und unter indirekter Aufheizung der Phosphorsäurekreisläufe ausserhalb der Verdampfer mittels überschüssiger Wärme aus einer Schwefelsäurekontaktanlage aufkonzentriert wird, dadurch gekennzeichnet, dass die indirekte Aufheizung der Phosphorkreisläufe durch im geschlossenen Kreislauf geführtes Druckwasser erfolgt, das im indirekten Wärmeaustausch mit der Schwefelsäure der Kreisläufe der $SO_3$-Absorptionssysteme der Schwefelsäurekontaktanlage mittels in der Schwefelsäure anfallender und abzuführender überschüssiger Wärme aufgeheizt wird.

**Claim**

A process of strengthening dilute phosphoric acid, which is conducted in a plurality of separate phosphoric acid cycles, which are associated with respective vacuum evaporator stages connected in series, and is indirectly heated in each cycle outside the evaporators by means of surplus heat from a contact process sulfuric acid plant, characterized in that the phosphoric acid in the phosphoric acid cycles is indirectly heated by means of water under pressure which is conducted in a closed cycle and heated by an indirect heat exchange with the sulfuric acid of the sulfuric acid cycles of the $SO_3$ absorption systems of the contact sulfuric acid plant by means of surplus heat which becomes available in the sulfuric acid and is to be dissipated.

**Revendication**

Procédé de concentration d'acide phosphorique dilué, qui consiste à concentrer l'acide phosphorique dilué dans plusieurs étages d'évaporateur sous vide montés en série, ayant chacun un recyclage séparé des acides phosphoriques et un chauffage indirect des circuits d'acide phosphorique en dehors des évaporateurs par la chaleur en

0005875

excès provenant d'une installation de fabrication d'acide sulfurique par le procédé de contact, caractérisé en ce qu'il consiste à effectuer le réchauffement indirect des circuits d'acide phosphorique, par de l'eau sous pression qui circule en circuit fermé et qui est réchauffée par échange de chaleur indirecte avec l'acide sulfurique des circuits d'acide des systèmes d'absorption du $SO_3$ de l'installation de fabrication d'acide sulfurique par le procédé de contact, à l'acide de la chaleur en excès se produisant dans l'acide sulfurique et se dissipant de celui-ci.

Fig. 1